# EUROPÄISCHE PATENTANMELDUNG

(11) **EP 2 992 789 A1**
(43) Veröffentlichungstag der Anmeldung: **09.03.2016**
(21) Anmeldenummer: 14183392.1
(22) Anmeldetag: 03.09.2014
(51) Int. Cl.: A47J 31/06, A47J 31/36

(54) **Kapseladapter**

(71) Anmelder: BEEM, 61191 Rosbach v.d.H. (DE)
(72) Erfinder: Mehshat, Bijan, 61273 Wehrheim (DE)
(74) Vertreter: Patentanwälte Olbricht Buchhold Keulertz

(57) **Zusammenfassung**

Die Erfindung betrifft einen Kapseladapter (1) für einen Siebträger einer Kaffeemaschine, mit einem nach oben offenen Aufnahmeraum (5) für eine Kaffeekapsel.

Um auch große Unterschiede zwischen Siebträger und Kapseladapter ausgleichen zu können, ist der Kapseladapter doppelwandig mit einem becherförmigen Außengehäuse (2) und einem darin angeordneten Einsatz (3) ausgebildet, wobei der Aufnahmeraum (5) im Einsatz (3) ausgebildet ist

## Beschreibung

Die Erfindung betrifft einen Kapseladapter für einen Siebträger einer Kaffeemaschine gemäß dem Oberbegriff von Anspruch 1.

Kaffeemaschinen mit Siebträger, die zusammenfassend auch Siebträger-Kaffeemaschinen genannt werden, sind seit Jahren bekannt. Dabei wird der Siebträger mittels eines Bajonettverschlusses druckfest mit der Kaffeemaschine verbunden. Zur Kaffeebereitung wird im Siebträger Kaffeepulver eingefüllt, der anschließend an die Kaffeemaschine angeschlossen wird. Durch den Siebträger mit dem Kaffeepulver wird dann unter Druck stehendes heißes Wasser geleitet. Dieses Wasser fließt dabei von oben in den Siebträger hinein und durch den Kaffee sowie einem Sieb zu einer Öffnung im Boden des Siebträgers, aus der schließlich der fertig gebrühte Kaffee in eine darunter gestellte Tasse gelangt.

Mit derartigen Siebträger-Kaffeemaschinen lässt sich sehr hochwertiger Kaffee herstellen. Allerdings erfordert die Befüllung des Siebträgers und die anschließende Reinigung relativ viel Zeit.

Daher haben sich mehr und mehr auch Kaffeemaschinen verbreitet, bei denen der Kaffee in Kapseln vorportioniert wird, die in entsprechende Aufnahmen der Kaffeemaschinen eingesetzt werden können.

Es gibt verschiedene Arten von Kapseln. Viele Kapseln werden vollständig aus einem Wasserundurchlässigen Material hergestellt, um möglichst lange die Frische des Kaffees garantieren zu können. Diese Kapseln müssen in der Kaffeemaschine oberseitig und unterseitig perforiert werden, damit das heiße Wasser in die Kapsel gelangen und der aufgebrühte Kaffee auf der anderen Seite aus der Kapsel heraus fließen kann. Dafür sind entsprechende Aufstechelemente, in der Regel Dorne, in der Kaffeemaschine erforderlich, die beispielsweise über einen Hebel aufeinander zubewegt werden, um die Kapsel zu perforieren. Es gibt aber auch Kapseln, die zumindest teilweise aus Materialien bestehen, die Wasser durchlässig sind. Bei diesen Bauformen kann auf Aufstechelemente verzichtet werden. Auf derartige Kapseln bezieht sich die vorliegende Erfindung.

Um auch bei Siebträger-Kaffeemaschinen mit geringem Aufwand einen Kaffee brühen zu können, wird beispielsweise in DE 10 2013 008 893 A1 vorgeschlagen, anstelle eines handelsüblichen Siebträgers einen Siebträger zu verwenden, der zur Aufnahme einer Kapsel geeignet ist. Ferner wird ein Kapseladapter in Form eines topfförmigen Einsatzes vorgeschlagen, der in einen herkömmlichen Siebträger eingesetzt werden kann. Dieser Kapseladapter weist dabei einen radial nach innen ragenden Ringflansch auf, an den die Kapsel mit einem entsprechenden Anlageflansch angelegt werden kann, wobei sich die Kapsel im Übrigen frei in den Kapseladapter hinein erstreckt. Gegebenenfalls kann dabei der Ringflansch mit einem radialen Dichtungselement versehen sein, um ein Durchtreten von Wasser zwischen der Kapsel und dem Kapseladapter zu verhindern.

Da ein Aufnahmeraum eines Siebträgers üblicherweise einen relativ großen Durchmesser aufweist, um eine ausreichende Menge an Kaffee aufnehmen zu können, während die Kapseln einen deutlich geringeren Durchmesser haben, besteht das Problem, dass der Kapseladapter entweder relativ dickwandig ausgebildet sein muss, um einen Zwischenraum zwischen einer Innenwandung des Siebträgers und der Kapsel auszufüllen, oder dass bei einer dünnwandigen Ausbildung die Kapsel relativ frei innerhalb des Kapseladapters liegt.

Der Erfindung liegt nun die Aufgabe zu Grunde, die Nachteile des Stands der Technik zu vermeiden und insbesondere einen Kapseladapter anzugeben, der zum einen mit wenig Spiel innerhalb eines Siebträger aufnehmbar ist, zum anderen aber auch einen sicheren Halt der Kapsel ermöglicht. Dabei soll er möglichst kostengünstig herstellbar sein.

Bei einem Kapseladapter für einen Siebträger einer Kaffeemaschine, mit einem nach oben offenen Aufnahmeraum für eine Kaffeekapsel, wird diese Aufgabe erfindungsgemäß dadurch gelöst, dass der Kapseladapter doppelwandig mit einem becherförmigen Außengehäuse und einem darin angeordneten Einsatz ausgebildet ist, wobei der Aufnahmeraum im Einsatz ausgebildet ist.

Gegenüber einer einwandigen Ausgestaltung hat dies den Vorteil, dass zum einen unterschiedliche Materialien verwendet werden können und zum anderen bei größeren Durchmesserunterscheiden zwischen Außendurchmesser des Kapseladapters und dem Aufnahmeraum Material eingespart werden kann, da die Wandung des Kapseladapters nicht massiv ausgebildet sein muss. Somit ist sowohl ein sicherer Halt des Kapseladapters im Siebträger als auch der Kapsel im Kapseladapter erreichbar, wobei darüber hinaus durch einfachen Austausch des Einsatzes der Kapseladapter an unterschiedliche Kapseln anpassbar ist.

Bei einer bevorzugten Weiterbildung weist das Außengehäuse ein Metall und der Einsatz einen Kunststoff auf, wobei das Außengehäuse insbesondere mittels Tiefziehen und der Einsatz insbesondere als Spritzgussteil hergestellt ist. Das Außengehäuse ist dadurch relativ unempfindlich gegenüber mechanischen Einflüssen und weist eine glatte Oberfläche auf, so dass es mit geringer Reibung in den Siebträger eingesetzt werden kann. Der Einsatz kann dabei insbesondere als Spritzgussteil einfach in der gewünschten Form hergestellt werden und wird vom Außengehäuse gegen äußere Einflüsse geschützt. Dementsprechend kann der Einsatz ein weicheres Material aufweisen, das mit geringerem Aufwand umformbar ist und auch bei Spiel der Kapsel eine gute Geräuschdämpfung bietet.

Dabei ist bevorzugterweise zwischen dem Außengehäuse und dem Einsatz zumindest eine Radialdichtung angeordnet, die insbesondere in einer Ringnut, die in einer Umfangswandung des Einsatzes ausgebildet ist, gehalten ist. Dadurch wird zuverlässig verhindert, dass heißes Wasser zwischen Einsatz und Außengehäuse gelangt.

In einer besonders bevorzugten Weiterbildung weist der Kapseladapter ein Bodenelement auf, wobei ein Boden des Außengehäuses zwischen dem Bodenelement und dem Einsatz angeordnet ist und der Einsatz am Bodenelement befestigt ist. Der Einsatz wird also durch das Bodenelement sicher im Außengehäuse gehalten, wobei der Kapseladapter auf dem Bodenelement abgestellt werden kann. Das Bodenelement kann dabei beispielsweise aus Kunststoff, insbesondere als Spritzgussteil, hergestellt werden und kann so auch als Verkratzungsschutz beim Abstellen des Kapseladapters dienen. Dabei wird durch die Befestigung von Bodenelement und Einsatz bei Zwischenlage des Bodens des Außengehäuses ein sicherer Halt erreicht, der auch bei temperaturbedingten Ausdehnungen zuverlässig ist.

Vorzugsweise weist der Einsatz an seiner Unterseite insbesondere drei zylindrische Fortsätze auf, die sich durch entsprechende Öffnungen im Boden des Außengehäuses in Richtung Bo-denelement erstrecken. Gegebenenfalls kann auch noch ein zusätzlicher Vorsprung zur Lagesicherung vorgesehen sein, der sich in eine entsprechende Ausnehmung im Boden des Außengehäuses erstreckt.

Dabei ist besonders bevorzugt, dass das Bodenelement insbesondere drei Standfüße aufweist, wobei gegebenenfalls ein Ende der Fortsätze jeweils in einem der Standfüße aufgenommen ist. Die Standfüße ermöglichen zum einen ein sicheres Abstellen des Kapseladapters außerhalb des Siebträgers. Zum anderen stellen sie ausreichend Material zur Verfügung, um die Enden der Fortsätze aufzunehmen und so eine Verbindung herzustellen. Gegebenenfalls kann dabei eine Pressverbindung oder eine Rastverbindung hergestellt werden, um den Einsatz am Bodenelement zu sichern.

Vorteilhafterweise sind das Bodenelement und der Einsatz mittels Befestigungsmitteln, insbesondere mittels Schrauben, aneinander befestigt, die sich durch entsprechende Öffnungen im Boden des Außengehäuses erstrecken, wobei die Befestigungsmittel insbesondere in den Standfüßen und den Vorsprüngen aufgenommen sind. Dies stellt eine einfache, besonders zuverlässige Verbindung dar, die im Falle der Verwendung von Schrauben auch problemlos wieder lösbar ist, um beispielsweise einen Austausch des Einsatzes zu ermöglichen. Dabei kann in den Fortsätzen ein Innengewinde eingeformt sein, in das die Schrauben eingeschraubt werden, wobei Schraubenköpfe dann innerhalb der Standfüße aufgenommen werden. Dies stellt eine besonders einfache, zuverlässige Ausgestaltung dar.

Bevorzugterweise ist im Bodenelement ein Auslasselement ausgebildet, das mit einer Auslassöffnung des Einsatzes in fluidleitender Verbindung steht. Dabei ist der Einsatz ist bis auf die Auslassöffnung unterseitig geschlossen, so dass aus der Kapsel austretender gebrühter Kaffee vollständig durch diese Auslassöffnung austritt. Das Auslasselement, dass insbesondere einstückig mit dem Bodenelement ausgebildet ist, kann dann den Kaffee zu entsprechenden Auslassdüsen des Siebträgers führen.

In einer bevorzugten Weiterbildung ist an der Auslassöffnung des Einsatzes ein Ringflansch angeformt, der sich durch eine zentrale Öffnung im Boden des Außengehäuses erstreckt. Der gebrühte Kaffee wird damit direkt in das Auslasselement geführt.

Eine besonders sichere Verbindung zum Auslasselement ergibt sich dadurch, dass ein freies Endes des Ringflansches in einer Ausnehmung des Boden aufgenommen sein kann. Die Ausnehmung verläuft dabei insbesondere zentrisch um das Auslasselement bzw. ist innerhalb des Auslasselementes ausgebildet, so dass das Auslasselement eine Verlängerung des Ringflansches bildet, ohne innenseitig eine Stufe aufzuweisen. Ein leichter Abfluss des gebrühten Kaffees wird so erreicht.

Gegebenenfalls kann vorgesehen sein, zwischen dem Boden des Außengehäuses und dem Bodenelement ein Sieb anzuordnen. Dieses Sieb liegt dann vor dem Auslasselement und kann so das Austreten von Kaffeepulver während des Brühvorgangs verhindern.

Die Erfindung wird im Folgenden anhand eines bevorzugten Ausführungsbeispiels in Verbindung mit den Zeichnungen näher beschrieben. Hierin zeigen in schematischer Ansicht:

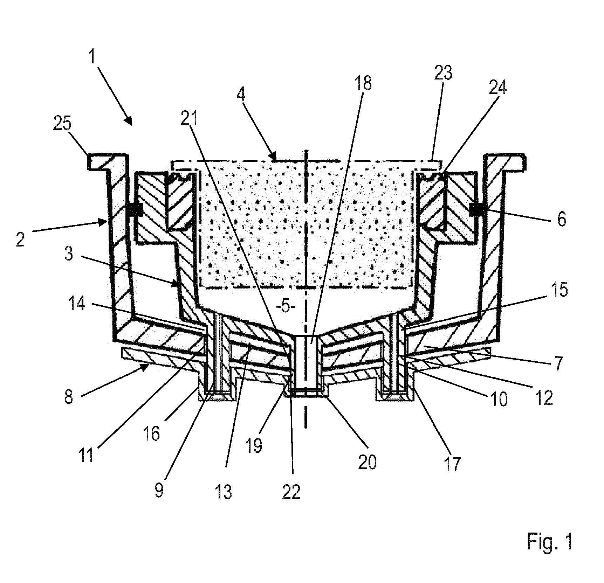

- Fig. 1: eine geschnittene Seitenansicht eines Kapseladapters

In Fig. 1 ist ein Kapseladapter 1 dargestellt, der ein Außengehäuse 2 aufweist, in dem ein Einsatz 3 aufgenommen ist. Das Außengehäuse 2 und der Einsatz 3 bilden somit einen doppelwandigen Kapseladapter 1, wobei eine Kaffeekapsel 4 in einen nach oben offenen, trichterförmig zulaufenden Aufnahmeraum 5 eingesetzt werden kann, der im Einsatz 3 ausgebildet ist. Dabei ist zwischen dem Einsatz 3 und dem Außengehäuse 2 eine Radialdichtung 6 angeordnet, die ein Eindringen von Feuchtigkeit zwischen Außengehäuse 2 und Einsatz 3 verhindert.

Die Kaffeekapsel 4 liegt dabei mit einem umlaufenden Rand 23 auf einer Ringdichtung 24 auf, die im Bereich einer oberen Öffnung des Aufnahmeraums 5 angeordnet ist und diesen konzentrisch umgibt. Dabei ist die Ringdichtung in einer entsprechenden, ringfömigen Ausnehmung aufgenommen, wobei eine Innenseite der Ringdichtung fluchtend in eine Innenseite des Aufnahmeraums 5 übergeht.

Ein Boden 7 des Außengehäuses 2 ist mit einem Bodenelement 8 abgedeckt, das über Befestigungsmittel 9, 10, die als Senkkopfschrauben ausgebildet sind, mit dem Einsatz 3 verbunden ist. Somit befindet sich der Boden 7 zwischen Einsatz 3 und Bodenelement 8, wobei sich die Befestigungsmittel 9, 10 durch Öffnungen 11, 12 im Boden 7 erstrecken.

Der Einsatz 3 weist an seiner Unterseite 13 Fortsätze 14, 15 auf, die sich ebenfalls durch die Öffnungen 11, 12 hindurch erstrecken und mit ihren Enden im Bereich von Standfüßen 16, 17 des Bodenelements 8 in diesem aufgenommen sind. Dadurch ergibt sich eine zusätzliche formschlüssige und entsprechend stabile Verbindung.

In den Fortsätzen 14, 15 sind Innengewinde zur Aufnahme mit den als Senkkopfschrauben ausgebildeten Befestigungsmitteln 9, 10 eingeschnitten. Die Löcher mit den Innengewinden sind dabei als Sacklöcher ausgebildet, so dass eine Innenseite des Einsatzes 3 nicht durchbrochen wird.

Zum Auslassen von gebrühten Kaffee, der aus der Kapsel 4 herausfließt zentrale ist eine Auslassöffnung 18 im Einsatz 3 ausgebildet. Die Auslassöffnung 18 steht über einen Ringkragen 19 fluiddicht mit einem Auslasselement 20 in Verbindung, das am Bodenelement 8 und einstückig mit diesem ausgebildet ist. Dabei erstreckt sich der Ringkragen 18 durch eine zentrale Öffnung 21 im Außengehäuse 2 und ist mit seinem freien Ende in einer Ausnehmung 22 aufgenommen, die im Bodenelement innerhalb des Auslasselements ausgebildet ist.

Zum Brühen eines Kaffees mit dem erfindungsgemäßen Kapseladapter 1 muss nur eine entsprechende Kaffeekapsel 4, die zumindest oberseitig und unterseitig Perforierungen aufweist, in den Aufnahmeraum 5 eingesetzt werden. Der Kapseladapter 1 wird dann in einen Siebträger eingesetzt, falls er sich nicht schon darin befindet. Dabei liegt der Kapseladapter mit einem umlaufenden oberen Rand 25 an einer Oberkante des Siebträger an. Nach Montage des Siebträgers an der Kaffeemaschine kann von der Kaffeemaschine kommendes heißes und unter Druck stehendes Wasser durch die Kapsel 4 hindurchfließen, wobei frisch gebrühter Kaffee aus der Kapsel 4 austritt und durch die Auslassöffnung in das Auslasselement geführt wird. Im einfachsten Fall, wie vorliegend, ist das Auslasselement als einfaches Rohrstück ausgebildet. Gegebenenfalls können aber auch abweichende Ausgestaltungen vorgesehen werden, um den gebrühten Kaffee direkt zu Auslässen des Siebträgers zu führen.

Die Erfindung ist nicht auf eine der vorbeschriebenen Ausführungsformen beschränkt, sondern in vielfältiger Weise abwandelbar. So sind beispielsweise insbesondere drei Fortsätze in Verbindung mit drei Standfüßen vorgesehen. Ferner kann zwischen Bodenelement und Außengehäuse beispielsweise ein Sieb vorgesehen werden, um das Herausfließen von Kaffeepulverresten zu verhindern. Je nach Art der zu Kaffeekapseln können auch Einstechmittel vorgesehen werden, die die Kaffeekapsel beim Einsetzen in den Aufnahmeraum perforieren, um das Eindringen von heißem Wasser und/oder das Austreten von gebrühten Kaffee bei an sich wasserundurchlässigen Kapseln zu ermöglichen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Kapseladapter (1) für einen Siebträger einer Kaffeemaschine, mit einem nach oben offenen Aufnahmeraum (5) für eine Kaffeekapsel, **dadurch gekennzeichnet, dass** der Kapseladapter doppelwandig mit einem becherförmigen Außengehäuse (2) und einem darin angeordneten Einsatz (3) ausgebildet ist, wobei der Aufnahmeraum (5) im Einsatz (3) ausgebildet ist.

2. Kapseladapter nach Anspruch 1, **dadurch gekennzeichnet, dass** das Außengehäuse (2) ein Metall und der Einsatz (3) einen Kunststoff aufweist, wobei das Außengehäuse (2) insbesondere mittels Tiefziehen und der Einsatz (3) insbesondere als Spritzgussteil hergestellt ist.

3. Kapseladapter nach Anspruch 1 oder 2, **dadurch gekennzeichnet, dass** zwischen dem Außengehäuse (2) und dem Einsatz (3) zumindest eine Radialdichtung (6) angeordnet ist, die insbesondere in einer Ringnut, die in einer Umfangswandung des Einsatzes (3) ausgebildet ist, gehalten ist.

4. Kapseladapter nach einem der vorhergehenden Ansprüche, **dadurch gekennzeichnet, dass** er ein Bodenelement (8) aufweist, wobei ein Boden (7) des Außengehäuses (2) zwischen dem Bodenelement (8) und dem Einsatz (3) angeordnet ist und der Einsatz (3) am Bodenelement (8) befestigt ist.

5. Kapseladapter nach einem der vorhergehenden Ansprüche, **dadurch gekennzeichnet, dass** der Einsatz (3) an seiner Unterseite (13) insbesondere drei zylindrische Fortsätze (14, 15) aufweist, die sich durch entsprechende Öffnungen (11, 12) im Boden (7) des Außengehäuses (2) in Richtung Bodenelement (8) erstrecken.

6. Kapseladapter nach einem der vorhergehenden Ansprüche, **dadurch gekennzeichnet, dass** das Bodenelement (8) insbesondere drei Standfüße (16, 17) aufweist, wobei gegebenenfalls ein Ende der Fortsätze (14, 15) jeweils in einem der Standfüße (16, 17) aufgenommen ist.

7. Kapseladapter nach einem der vorhergehenden Ansprüche, **dadurch gekennzeichnet, dass** das Bodenelement (8) und der Einsatz (3) mittels Befestigungsmitteln (9, 10), insbesondere Schrauben, aneinander befestigt sind, die sich durch entsprechende Öffnungen (11, 12) im Boden (7) des Außengehäuses (2) erstrecken, wobei die Befestigungsmittel (9, 10) insbesondere in den Standfüßen (16, 17) und den Fortsätzen (14, 15) aufgenommen sind.

8. Kapseladapter nach einem der vorhergehenden Ansprüche, **dadurch gekennzeichnet, dass** im Bodenelement (8) ein Auslasselement (20) ausgebildet ist, das mit einer Auslassöffnung (18) des Einsatzes (3) in fluidleitender Verbindung steht.

9. Kapseladapter nach einem der vorhergehenden Ansprüche, **dadurch gekennzeichnet, dass** an der Auslassöffnung (18) des Einsatzes (3) ein Ringkragen (19) angeformt ist, der sich durch eine zentrale Öffnung (21) im Boden (7) des Außengehäuses (2) erstreckt.

10. Kapseladapter nach einem der vorhergehenden Ansprüche, **dadurch gekennzeichnet, dass** ein freies Endes des Ringkragens (19) in einer Ausnehmung (22) des Bodenelements (8) aufgenommen ist.
